Europäisches Patentamt

(19) European Patent Office

Office européen des brevets

(11) Numéro de publication : **0 317 596 B1**

(12) **FASCICULE DE BREVET EUROPEEN**

(45) Date de publication du fascicule du brevet :
02.05.91 Bulletin 91/18

(21) Numéro de dépôt : **88904563.9**

(22) Date de dépôt : **19.05.88**

(86) Numéro de dépôt international :
**PCT/FR88/00253**

(87) Numéro de publication internationale :
**WO 88/09247 01.12.88 Gazette 88/26**

(51) Int. Cl.⁵ : **B25J 15/04, B25J 3/00**

(54) **DISPOSITIF DE VERROUILLAGE POUR PINCE DE PREHENSION D'UN TELEMANIPULATEUR.**

(30) Priorité : 20.05.87 FR 8707067

(43) Date de publication de la demande :
31.05.89 Bulletin 89/22

(45) Mention de la délivrance du brevet :
02.05.91 Bulletin 91/18

(84) Etats contractants désignés :
**BE DE GB IT**

(56) Documents cités :
**EP-A- 0 104 118**

(73) Titulaire : **SOCIETE NOUVELLE
D'EXPLOITATION DE LA CALHENE
1 rue du Petit Clamart
F-78140 Velizy Villacoublay (FR)**

(72) Inventeur : **TEILLAUCHET, Eric 36, rue de la
Vallée-du-Loir
Areines
F-41100 Vendôme (FR)**
Inventeur : **BANDIERA, Angelo
1, rue des Etats-Unis
F-41100 Vendôme (FR)**
Inventeur : **GIRAULT, Laurent
21, rue Denis-Papin
F-41000 Blois (FR)**

(74) Mandataire : **Mongrédien, André et al
c/o BREVATOME 25, rue de Ponthieu
F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

une manoeuvre inopinée de la poignée de commande d'entraîner les rubans de transmission de mouvements logés dans le bras esclave lorsque la pince et la genouillère qui la supportent sont déconnectées. Par conséquent, aucun décalage ne peut être créé entre ces rubans et les organes correspondants logés dans la genouillère et dans la pince, de sorte que L'arrivée en bout de course des rubans avant la venue en butée des organes mécaniques de la pince n'est plus possible. De ce fait, tout risque de cassure accidentelle des rubans due a une telle manoeuvre est supprimé.

Selon un mode de réalisation préféré de l'invention, le dispositif de verrouillage automatique comprend deux séries d'organes de blocage, un organe de blocage de chaque série venant s'appliquer contre des flancs opposés des dents de chaque pignon de la première série de pignons, sous L'effet des moyens élastiques, pour interdire toute rotation de ces pignons lorsque la genouillère est démontée.

Les organes de blocage de chaque série peuvent notamment être fixés sur un axe commun, une butée étant fixée sur chacun desdits axes.

De préférence, les axes portant les organes de blocage de chaque série sont disposés approximativement de part et d'autre des pignons de la première série de pignons, les organes de blocage ayant la forme de cliquets orientés vers ces pignons et appliqués contre ces derniers par au moins un ressort de traction interposé entre les deux séries d'organes de blocage et formant lesdits moyens élastiques.

Dans le cas particulier où la pince de préhension est elle-même fixée de façon démontable sur la genouillère, les butées mécaniques de fin de course concernant le mouvement de serrage de la pince sont supprimées lorsque celle-ci est démontée. Le problème précédent se trouve donc limité dans ce cas au risque de rupture du ruban commandant ce serrage, si la poignée est actionnée de façon intempestive lorsque la pince est démontée.

Dans ce cas particulier et conformément à un perfectionnement de L'invention, les mécanismes de commande de mouvements précités comprennent de plus un arbre tournant de commande de serrage de la pince, logé dans une pièce tubulaire non tournante de la genouillère et dont une partie faisant saillie hors de cette pièce est pourvue de cannelures, ladite partie pourvue de cannelures étant reçue dans un trou cannelé formé dans une pièce de commande de serrage de la pince lorsque cette dernière est fixée sur la genouillère. Le dispositif de verrouillage comprend alors de plus une bague interposée entre la pièce tubulaire et l'arbre tournant, des moyens pour immobiliser la bague en rotation dans la pièce tubulaire et pour permettre un déplacement limité de la bague selon un axe commun à l'arbre tournant, à la pièce tubulaire et à la bague entre une position avant dans laquelle la bague est engrenée sur les cannelures de ladite partie et une position arrière dans laquelle la bague est dégagée desdites cannelures, des moyens élastiques tendant à déplacer la bague vers ladite position avant, et une surface d'appui formée sur la pièce de commande de serrage, cette surface d'appui maintenant ladite bague dans sa position arrière lorsque la pince est fixée sur la genouillère.

De préférence, la bague présente un trou oblong orienté parallèlement audit axe, dans lequel est reçue une clavette immobilisant la bague en rotation dans la pièce tubulaire et permettant son déplacement entre lesdites positions avant et arrière.

Dans un mode de réalisation particulier de l'invention, la bague comprend une couronne intérieure cannelée, cette couronne étant engrenée sur les cannelures lorsque la bague est dans sa position avant, alors qu'elle est logée dans une gorge annulaire prolongeant les cannelures, lorsque la bague est dans sa position arrière.

Un mode de réalisation préféré de l'invention va maintenant être décrit, à titre d'exemple nullement limitatif, en se référant aux dessins annexés dans lesquels :

- la figure 1 est une vue de côté représentant schématiquement le bras esclave d'un télémanipulateur, la genouillère démontable pouvant être fixée à l'extrémité de ce bras et la pince de préhension démontable pouvant être fixée sur cette genouillère,
- la figure 2 est une vue en coupe longitudinale selon la ligne II-II de la figure 1, représentant à plus grande échelle l'extrémité du bras esclave ainsi que la genouillère,
- la figure 3 est une vue en coupe longitudinale partielle représentant les parties attenantes de la pince de préhension et de la genouillère en cours de raccordement,
- la figure 4 est une vue en coupe selon la ligne IV-IV de la figure 2,
- la figure 5 est une vue en coupe selon la ligne V-V de la figure 4, et
- la figure 6 est une vue en coupe selon la ligne VI-VI de la figure 3.

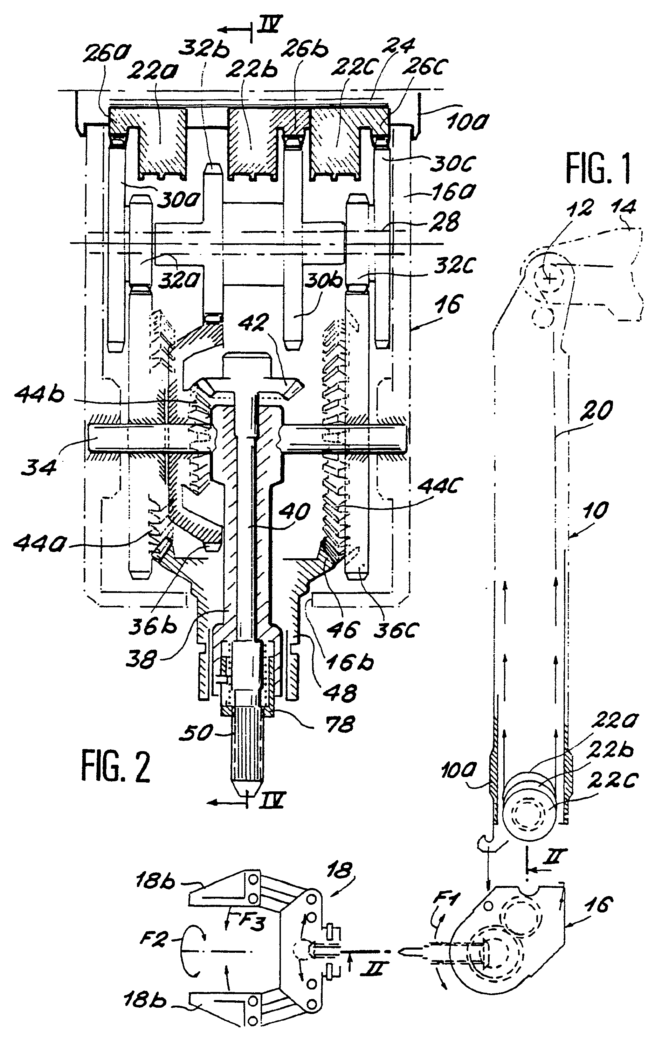

Sur la figure 1, on a représenté de façon très schématique le segment avant 10 du bras esclave d'un télémanipulateur articulé. Ce segment avant 10 est articulé par un axe de coude 12 sur un segment arrière 14, lui-même articulé par un axe d'épaule sur un bloc support monté à l'intérieur d'une cellule (non représentée).

Des moyens de fixation démontables permettent de monter et de démonter à distance une genouillère 16 à l'extrémité libre du bras esclave 10. Dans l'exemple de réalisation représenté, une pince de préhension articulée 18 est également fixée de façon démontable sur la genouillère 18 par des moyens pouvant être actionnés à distance, qui seront décrits ultérieurement.

lorsque la partie tubulaire 18a du corps de pince vient coiffer l'embout 48 de la genouillère, les cannelures 50 sont en prise avec les cannelures 56.

A son extrémité située a l'intérieur du corps de pince, la pièce 52 est pourvue d'une denture inclinée 58 coopérant de façon connue avec un système de pignons commandant le rapprochement des mâchoires 18b (figure 1) de la pince, lorsqu'un mouvement de péhension $F_3$ est nécessaire.

Lorsque la pince 18 est connectée sur la genouillère 16 et que cette dernière est connectée à l'extrémité du bras 10, les mouvements d'orientation $F_1$ et $F_2$ et de serrage $F_3$ de la pince 18 sont transmis des rubans 20 à la genouillère et à la pince, par l'intermédiaire des mécanismes qui viennent d'être décrits, de la façon suivante.

Lorsque les rubans 20 enroulés sur les poulies 22a et 22c sont actionnés simultanément dans le même sens et à la même vitesse, les pignons coniques 44a et 44c sont eux-mêmes entraînés en rotation dans le même sens et à la même vitesse par l'intermédiaire des chaînes cinématiques formées respectivement d'une part par les pignons 26a, 30a, 32a, 36a et d'autre part par les pignons 26c, 30c, 32c et 36c. Etant donné que ces pignons coniques 44a et 44c sont engrenés sur le pignon conique 46 en des points diamétralement opposés de ce dernier, celui-ci ne tourne pas autour de son axe propre mais l'ensemble formé par l'arbre 40, la pièce 38 et l'embout 48, ainsi que par la pince supportée par cet ensemble, est entraîné en pivotement autour de l'axe 34. On obtient ainsi le mouvement $F_1$ sur la figure 1.

Au contraire, lorsque les rubans 20 passant sur les poulies 22a et 22c sont entraînés en sens inverse et à la même vitesse, les chaînes cinématiques de pignons précédemment mentionnées conduisent à un mouvement de rotation en sens inverse et à la même vitesse des pignons coniques 44a et 44c. Dans ce cas, le pignon conique 46 est entraîné en rotation autour de son axe propre, de même que l'embout 48 qui lui est solidaire et que la pince 18 qui est montée sur cet embout. Le mouvement de pivotement de la pince 18 autour de son axe propre, désigné par $F_2$ sur la figure 1, est ainsi obtenu.

Enfin, lorsque le ruban 20 enroulé sur la poulie centrale 22b se déplace, cette poulie entraîne en rotation par l'intermédiaire de la chaîne cinématique formée par les pignons 26b, 30b, 32b, 36b le pignon conique 44b. Ce dernier pignon étant engrené sur le pignon 42 solidaire de l'arbre 40, celui-ci est donc entraîné en rotation autour de son axe propre. Etant donné que les cannelure 56 de la bague 52 sont en prise sur les cannelures 50 de l'arbre 40, le mouvement de serrage $F_3$ de la pince est ainsi obtenu.

Bien entendu, dans la pratique, ces différents mouvements peuvent intervenir simultanément.

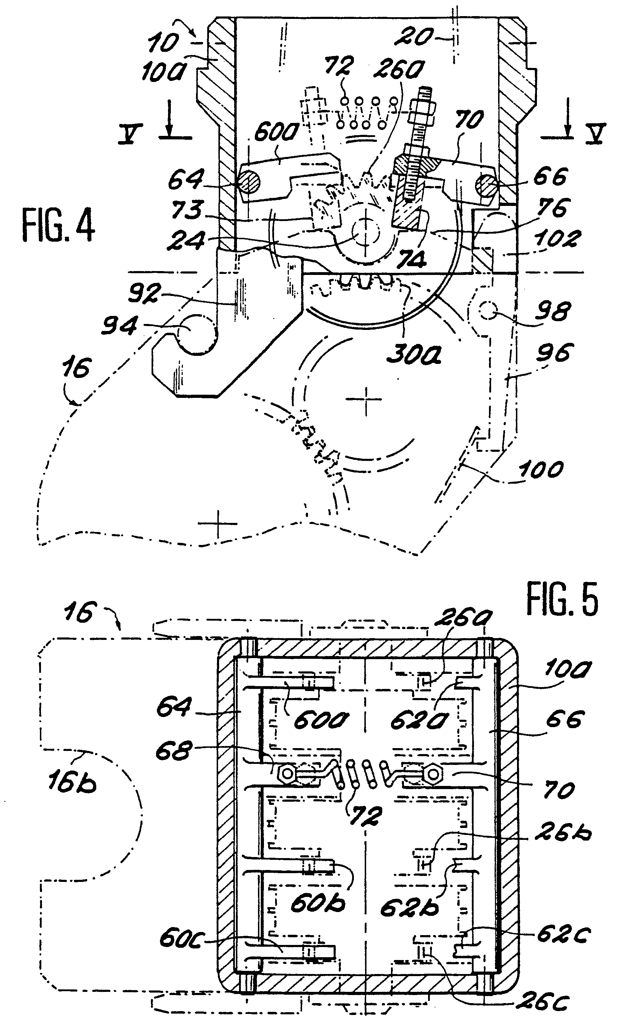

Dans la chaîne cinématique de pignons logée dans la genouillère 16 (figure 4), un effet de réduction est obtenu entre les mouvements des rubans 20 et les mouvements effectivement créés sur la pince 18. La localisation des réducteurs à l'intérieur de la genouillère 16 permet de supprimer les réducteurs qui sont généralement logés dans la pince de préhension 18. La tenue mécanique est ainsi améliorée puisque l'encombrement disponible à l'intérieur de la genouillère est sensiblement plus important que celui dont on dispose à l'intérieur de la pince.

Dans un bras esclave de télémanipulateur tel que celui qui vient d'être décrit, les mouvements $F_1$ et $F_2$ d'orientation de la pince sont limités par des butées mécaniques (non représentées) formées directement sur la genouillère 16 et le mouvement $F_3$ de serrage de la pince est limité par une butée mécanique formée à l'intérieur de la pince de préhension 18. Dans les conditions normales de fonctionnement, lorsque la commande d'un de ces trois mouvements amène les organes correspondants en contact contre ces butées mécaniques, les rubans 20 qui sont logés à l'intérieur du bras esclave disposent encore d'une certaine course de sécurité. Le temps de réponse des moteurs commandant les différents mouvements sur le bras esclave a donc pour seule conséquence un glissement de ces moteurs en cas de venue brutale en butée des organes qu'ils commandent.

En revanche, si l'ensemble formé par la genouillère 16 et la pince 18 est déconnecté du bras 10, en l'absence de disposition particulière un opérateur risque d'actionner de façon inopinée la poignée de commande du télémanipulateur. Les moteurs commandant les rubans 20 sont alors actionnés et effectuent un enroulement ou un déroulement parfois important des rubans 20 correspondants sur leurs cabestans. Si ce mouvement des rubans 20 commandé inopinément est supérieur à la course de sécurité dont disposent habituellement ces rubans, ces derniers arriveront alors en bout de course avant les organes mécaniques de la genouillère et de la pince lorsque ces derniers seront remontés sur le bras. Compte tenu du temps de réponse des moteurs, les rubans 20 correspondants sont alors soumis à des efforts importants qui conduisent fréquemment à leur rupture.

Conformément à l'invention, ce risque est totalement supprimé grâce à un dispositif permettant de verrouiller automatiquement les pignons 26a, 26b et 26c montés à l'extrémité du bras esclave 10 lorsque la genouillère 16 est déconnectée.

Comme l'illustrent plus précisément les figures 4 et 5, ce dispositif comprend deux séries de trois organes de blocage, les organes de blocage de chaque série étant désignés respectivement par les références 60a, 60b et 60c et par les références 62a, 62b et 62c. Chacun de ces organes de blocage a approximativement la forme d'un cliquet.

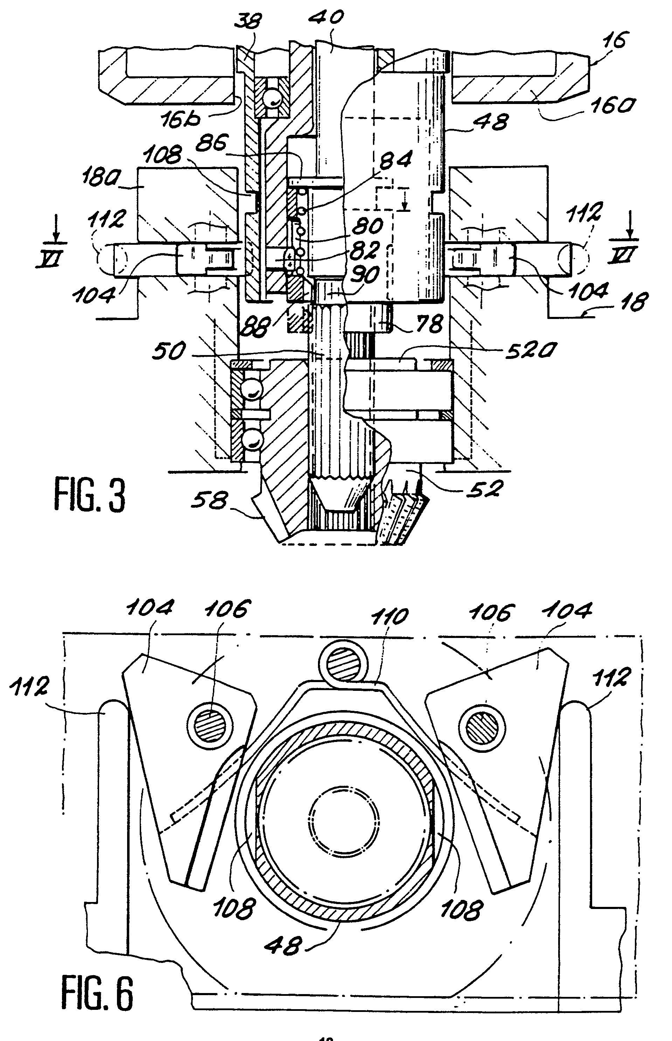

Les trois organes de blocage 60a, 60b et 60c sont fixés sur un axe commun 64 monté de façon pivotante

pleins sur la moitié gauche de la figure 3. Dans cette position, étant donné que les cannelures 88 se trouvent au niveau de la gorge 90 de l'arbre 40, ce dernier peut tourner librement pour transmettre à la pince un mouvement de préhension commandé par l'opérateur, bien que la bague 78 soit immobilisée en rotation par la clavette 82.

Au contraire, lorsque la pince de préhension 18 est démontée, le ressort 84 repousse la bague 78 dans sa position avant illustrée sur la moitié droite de la figure 3. Dans ces conditions, les cannelures 88 sont en prise sur les cannelures 50 de l'arbre 40, de sorte que ce dernier est automatiquement immobilisé en rotation dès que la pince est démontée. Tout déplacement du ruban 20 servant à commander le mouvement de serrage de la pince est alors impossible. De ce fait, les risques de cassure de ce ruban résultant de son arrivée en bout de course sont supprimés.

Sur les figures, on a également représenté à titre d'exemple nullement limitatif, un mécanisme permettant de fixer de façon démontable la genouillère 16 à l'extrémité du bras esclave 10, et un mécanisme permettant de fixer de façon démontable la pince de préhension 18 sur la genouillère 16.

Comme le montre la figure 4, le premier de ces mécanismes comprend deux crochets 92 fixés sur le corps 10a du bras esclave, de façon à venir entourer en partie une tige cylindrique 94 montée parallèlement aux axes 28 et 34 à l'intérieur du bottier 16a de la genouillère. Le verrouillage de la liaison est effectué automatiquement par un levier basculant 96 monté pivotant autour d'un axe 98 parallèle à la tige 94 dans le boîtier de la genouillère. Un ressort 100 agit sur ce levier 96, de façon à engager une extrémité 102 en forme de crochet de ce levier dans un trou formé à cet effet dans le corps 10a du bras esclave. Le déverrouillage est obtenu aisément en exerçant un effort sur l'extrémité du levier 96 opposée à l'extrémité 102 en forme de crochet, pour dégager cette dernière du trou formé dans le corps 10a. Le crochet 92 peut alors être dégagé de la tige 94.

Un mécanisme permettant de fixer de façon démontable la pince 18 sur la genouillère 16 est représenté sur les figures 3, 4 et 6. Ce mécanisme comprend essentiellement deux mâchoires 104 articulées sur la partie tubulaire 18a du corps de pince par deux axes 106 parallèles à l'axe de cette partie cylindrique. Ces mâchoires 104 sont logées dans des fentes appropriées formées dans la partie tubulaire 18a, de telle sorte qu'elles peuvent faire saillie à l'intérieur de celle-ci et venir s'emboîter dans des rainures droites diamétralement opposées 108 formées à la surface extérieure de l'embout tubulaire 48.

Un ressort de torsion 110 porté par la partie tubulaire 18a du corps de pince agit simultanément sur les deux mâchoires 104 pour les faire pivoter autour de leurs axes 106 dans le sens tendant à faire pénétrer ces mâchoires dans les rainures 108. De cette manière, lorsque la partie tubulaire 18a du corps de pince est emmanchée sur l'embout 48 de la genouillère, les mâchoires 104 viennent s'emboîter automatiquement dans les rainures 108, solidarisant ainsi en rotation et en translation le corps de pince de l'embout 48.

Comme le montre la figure 6, lorsqu'on désire démonter la pince 18, on fait pivoter les mâchoires 104 en sens inverse au moyen d'un outil 112 dont une partie seulement est représentée sur la figure. Cet outil 112 vient au contact de parties des mâchoires 104 faisant saillie à l'extérieur de la partie cylindrique 18a du corps de pince. On peut ainsi commander à l'aide de l'outil le basculement souhaité des mâchoires.

Bien entendu, l'invention s'applique également au cas d'un télémanipulateur télescopique, et quel que soit le nombre des rubans servant à commander les mouvements de la pince.

## Revendications

1. Dispositif de verrouillage automatique de mécanismes commandant différents mouvements ($F_1$, $F_2$, $F_3$) d'une pince de préhension (18) supportée par une genouillère (16) fixée de façon démontable à l'extrémité d'un bras esclave (10, 14) de télémanipulateur, lors d'un démontage de la genouillère, ces mécanismes comprenant une première série de pignons (26a, 26b, 26c) logés dans l'extrémité du bras esclave et une deuxième série de pignons (30a, 30b, 30c) montés dans la genouillère de façon à être engrenés sur les pignons de la première série lorsque la genouillère (16) est fixée à l'extrémité du bras esclave, ce dispositif étant caractérisé en ce qu'il comprend des organes de blocage mobiles (60a, 60b, 60c, 62a, 62b, 62c) logés dans l'extrémité du bras esclave, des moyens élastiques (72) tendant à appliquer ces organes de blocage contre les pignons (26a, 26b, 26c) de la première série, et au moins une butée (73, 74) solidaire des organes de blocage pour dégager ces derniers des pignons de la première série, sous l'effet de la venue en appui de cette butée contre une surface (76) en vis-à-vis formée sur la genouillère, lorsque cette dernière est fixée à l'extrémité du bras esclave.

2. Dispositif selon la revendication 1, caractérisé en ce qu'il comprend deux séries (60a, 60b, 60c ; 62a, 62b, 62c) d'organes de blocage, un organe de blocage de chaque série venant s'appliquer contre des flancs opposés des dents de chaque pignon (26a, 26b, 26c) de la première série de pignons, sous l'effet des moyens élastiques (72), pour interdire toute rotation de ces pignons lorsque la genouillère (16) est démontée.

3. Dispositif selon la revendication 2, caractérisé en ce que les organes de blocage de chaque série sont fixés sur un axe commun (64, 66), une butée (73, 74) étant fixée sur chacun desdits axes.

4. Dispositif selon la revendication 3, caractérisé en ce que les axes (64, 66) portant les organes de blocage de chaque série sont disposés approximativement de part et d'autre des pignons (20a, 20b, 20c) de la première série de pignons, les organes de blocage ayant la forme de cliquets orientés vers ces pignons et appliqués contre ces derniers par au moins un ressort de traction (72) interposé entre les deux séries d'organes de blocage et formant lesdits moyens élastiques.

5. Dispositif selon l'une quelconque des revendications 1 à 4, caractérisé en ce que, la pince de préhension (18) étant également fixée de façon démontable sur la genouillère (16) et lesdits mécanismes comprenant de plus un arbre tournant (40) de commande de serrage de la pince, logé dans une pièce tubulaire (38) non tournante de la genouillère et dont une partie faisant saillie hors de cette pièce est pourvue de cannelures (50), ladite partie pourvue de cannelures étant reçue dans un trou cannelé (56) formé dans une pièce (52) de commande de serrage de la pince lorsque cette dernière est fixée sur la genouillère, le dispositif de verrouillage comprend de plus une bague (78) interposée entre la pièce tubulaire (38) et l'arbre tournant (40), des moyens (80, 82) pour immobiliser la bague en rotation dans la pièce tubulaire et pour permettre un déplacement limité de la bague selon un axe commun à l'arbre tournant, à la pièce tubulaire et à la bague entre une position avant dans laquelle la bague est engrenée sur les cannelures (50) de ladite partie et une position arrière dans laquelle la bague est dégagée desdites cannelures, des moyens élastiques (84) tendant à déplacer la bague vers ladite position avant, et une surface d'appui (52a) formée sur la pièce de commande de serrage (52), cette surface d'appui maintenant ladite bague (78) dans sa position arrière lorsque la pince est fixée sur la genouillère.

6. Dispositif selon la revendication 5, caractérisé en ce que la bague (78) présente un trou oblong (80) orienté parallèlement audit axe, dans lequel est reçue une clavette (82) immobilisant la bague en rotation dans la pièce tubulaire (38) et permettant son déplacement entre lesdites positions avant et arrière.

7. Dispositif selon l'une quelconque des revendications 5 et 6, caractérisé en ce que la bague (78) comprend une couronne intérieure cannelée (88), cette couronne étant engrenée sur les cannelures (50) lorsque la bague est dans sa position avant, alors qu'elle est logée dans une gorge annulaire (90) prolongeant les cannelures, lorsque la bague est dans sa position arrière.

8. Dispositif selon l'une quelconque des revendications 1 à 7, caractérisé en ce que chacun des pignons (26a, 26b, 26c) de la première série de pignons est solidaire d'une poulie double (22a, 22b, 22c) comprenant deux poulies sur lesquelles s'enroulent en sens inverse deux rubans (20) dont les extrémités sont fixées sur ces deux poulies.

## Ansprüche

1. Vorrichtung zum automatischen Verriegeln von Mechanismen zum Steuern verschiedener Bewegungen ($F_1$, $F_2$, $F_3$) eines Greifers (18), der von einem Kniegelenk (16) getragen wird, das demontierbar am Ende eines mechanischen Arms (10, 14) eines Telemanipulators befestigt ist, für den Fall der Demontage des Kniegelenks, wobei diese Mechanismen eine erste Reihe von Ritzeln (26a, 26b, 26c), die im Ende des mechanischem Arms angeordnet sind, und eine zweite Reihe von Ritzeln (30a, 30b, 30c) umfassen, die so in, dem Kniegelenk montiert sind, daß sie In die erste Reihe greifen, wenn das Kniegelenk (16) am Ende des mechanischen Arms befestigt ist, wobei diese Vorrichtungen dadurch gekennzeichnet ist, daß sie bewegliche Blockierelemente (60a, 60b, 60c, 62a, 62b, 62c), die im Ende des mechanischen Arms angeordnet sind, eine elastische Vorrichtung (72), die dazu neigt, diese Blockierelemente gegen die Ritzel (26a, 26b, 26c) der ersten Reihe zu drücken, und wenigstens einen mit den Blockierelementen befestigten Anschlag (73, 74) umfaßt, um letztere von den Ritzeln der ersten Reihe unter der Einwirkung des Aufstützens dieses Anschlags auf eine gegenüberliegende, auf dem Kniegelenk gebildete Oberfläche (76) zu lösen, wenn letzteres am Ende des automatischen Arms befestigt ist.

2. Vorrichtung nach Anspruch 1, dadurch gekennzeichnet, daß sie zwei Reihen von Blockierelementen (60a, 60b, 60c ; 62a, 62b, 62c) umfaßt, wobei ein Blockierelement jeder Reihe gegen die gegenüberliegenden Zahnflanken jedes Ritzels (26a, 26b, 26c) der ersten Ritzelreihe unter dem Einfluß der elastischen Vorrichtung (72) drückt, um jegliche Rotation dieser Ritzel zu unterbinden, wenn das Kniegelenk (16) demontiert ist.

3. Vorrichtung nach Anspruch 2, dadurch gekennzeichnet, daß die Blockierelemente jeder Reihe auf einer gemeinsammen Achse (64, 66) montiert sind, wobei auf jeder dieser Achsen ein Anschlag (73, 74) montiert ist.

4. Vorrichtung nach Anspruch 3, dadurch gekennzeichnet, daß die Achsen (64, 66), die die Blockierelemente jeder Reihe tragen, in etwa auf der einen und der anderen Seite der Ritzel (20a, 20b, 20c) der ersten Ritzelreihe angeordnet sind, wobei die Blockierelemente die Form von Sperrklinken besitzen, die zu diesen Ritzeln gerichtet sind und gegen letzere mittels einer Zugfeder (72) gedrückt werden, die zwischen den beiden Reihen der Blockierelemente angeordnet ist und die elastische Vorrichtung bildet.

5. Vorrichtung nach einem der Ansprüche 1 bis 4, dadurch gekennzeichnet, daß, wenn der Greifarm (18) ebenfalls demontierbar an dem Kniegelenk (16) befestigt ist und die Mechanismen außerdem einen sich drehenden Baum (40) zum Steuern der Verriegelung des Arms umfassen, der in einem sich nicht drehenden, röhrenförmigen Abschnitt (38) des Kniegelenks angeordnet ist und von dem ein Teil, der aus diesem Abschnitt hervorsteht, mit Rippen versehen ist, wobei dieser Teil in einem gerippten Loch (56) aufgenommen ist, das in einem Teil (52) der Verriegelungssteuerung des Arms gebildet ist, wenn letzterer an dem Kniegelenk befestigt ist, die Verriegelungsvorrichtung außerdem einen Ring (78), der zwischen dem röhrenförmigen Abschnitt (38) und dem sich drehenden Baum (40) angeordnet ist, Vorrichtungen (80, 82) zum Stillhalten des sich drehenden Ringes indem röhrenförmigen Abschnitt und zum Ermöglichen einer begrenzten Bewegung des Rings zwischen einer vordren Position, in der der Ring in den Rillen (50) des Abschnitts eingerastet ist, und einer hinteren Position, in der der Ring von den Rillen gelöst ist, wobei eine elastische Vorrichtung (84) dazu neigt, den Ring in Richtung der vorderen Position zu bewegen, und eine Stützoberfläche (52a) umfaßt, die auf dem Verriegelungssteuerungsteil (52) gebildet ist, wobei diese Stützoberfläche den Ring (78) in seiner hinteren Stellung hält, wenn der Arm an dem Kniegelenk befestigt ist.

6. Vorrichtung nach Anspruch 5, dadurch gekennzeichnet, daß der Ring (78) ein längliches Loch (80) bildet, das parallel zur besagten Achse ausgerichtet ist, in der ein Schließkeil (82) aufgenommen ist, der den sich drehenden Ring in dem röhrenförmigen Abschnitt (38) stillhält und seine Bewegung zwischen der vorderen und hinteren Position ermöglicht.

7. Vorrichtung nach einem der Ansprüche 5 und 6, dadurch gekennzeichnet, daß der Ring (78) eine innere, gerippte Krone (88) umfaßt, wobei diese Krone in den Rippen (50) eingerastet ist, wenn der Ring in seiner vorderen Position ist, während sie sich in einer ringförmigen, die Rippen verlängernden Auskehlung (90) befindet, wenn der Ring in seiner hinteren Position ist.

8. Vorrichtung nach einem Ansprüche 1 bis 7, dadurch gekennzeichnet, daß jedes der Ritzel (26a, 26b, 26c) der ersten Ritzelreihe mit einer doppelten Rolle (22a, 22b, 22c) verbunden ist, die zwei Rollen umfaßt, um die sich in entgegengesetzter Richtung zwei Bänder (20) wickeln, deren Enden auf diesen Rollen befestigt sind.

## Claims

Device for the automatic locking of mechanisms controlling the various movements (F₁, F₂, F₃) of a pair of gripping pliers (18) borne by a ball and socket joint (16) secured in dismantlable way to the extremity of a slave arm (10, 14) of a remote handling device during dismantling of the ball and socket joint, these mechanisms comprising a first series of pinions (26a, 26b, 26c) housed in the estremity of the slave arm and a second series of pinions (30a, 30b, 30c) mounted inside the ball and socket joint so as to be geared onto the pinions of the first series when the ball and socket joint (16) is secured to the extremity of the slave arm, characterized in that said de vice comprises the mobile blocking devices (60a, 60b, 60c) housed inside the extremity of the slave arm, elastic means (72) tending to apply these blocking devices against the pinions (26a, 26b, 26c) of the first series, and at least one stop (73, 74) integral with the blocking devices so as to free the latter form the pinions of the first series under the effect of the stop coming to rest against an opposite surface (76) formed on the ball and socket joint when the latter is secured to the extremity of the slave arm.

2. Device according to claim 1, characterized in that it comprises two series (60a, 60b, 60c ; 62a, 62b, 62c) of blocking devices, one blocking device of each series coming to be applied against the opposite flanks of the teeth of each pinion (26a, 26b, 26c) of the first series of pinions under the effect of the elastic means (72) so as to stop these pinions rotating when the ball and socket joint is being dismantled.

3. Device according to claim 2, characterized in that the blocking devices of each series are secured to a common shaft (64, 66), a stop (73, 74) being secured to each shaft.

4. Device according to claim 3, characterized in that the shafts (64, 66) bearing the blocking devices of each are approximately diposed on both sides of the pinions (20a, 20b, 20c) of the first series of pinions, the blocking devices having the shape of ratchet gears oriented towards these pinions and applied against the latter by at least one draw spring (72) inserted between the two series of locking devices and forming said elastic means.

5. Device according to any one of claims 1 to 4, characterized in that the pair of gripping pliers (18) being also secured in a dismantlable way to the ball and socket joint (16) and said mechanisms comprising in addition a rotation shaft (40) for controlling tightening of the pliers, housed inside a tubular part (38) non-rotating from the ball and socket joint and whose portion projecting form this part is fitted with grooves (50), said portion provided with grooves being received inside a grooved hole (56) formed inside a part (52) for controlling tightening of the pliers when the latter is secured to the ball ans socket joint, the locking device also comprising a ring (78) inserted between the tubular part (38) and the rotating shaft (40), means (80, 82) to immobilize the ring in rotation inside the tubular part and allow for limited displacement of the ring along an axis common to the rotating shaft, the tubular part and the ring between a front position where the ring is geared onto the grooves (50) of said portion and a rear position where the ring is freed from said grooves, elastic means (84) tending to move the ring towards said front position, and an area of support (52a) formed on the tightening control part (52a), this area of support maintaining said ring (78) in its rear position when the pliers are secured to the ball and socket joint.

6. Device according to claim 5, characterized in that the ring (58) has an oblong hole (80) oriented parallel to said axis inside which a key (82) is received immobilizing the ring in rotation inside the tubular part (38) and allowing for its displacement between said front and rear positions.

7. Device according to either of claims 5 and 6, characterized in that the ring (78) comprises an interior grooved crown (88), this crown being geared on the grooves (50) when the ring is in its front position whilst it is housed in an annular recess (90) prolonging the grooves when the ring is in its rear position.

8. Device according to any one of the claims 1 to 7, characterized in that each pinion (26a, 26b, 26c) of the first series of pinions is integral with one double pulley (22a, 22b, 22c) comprising two pulleys on which wound in an opposite direction are two strips (20), whose extremities are secured to these two pulleys.

FIG. 1

FIG. 2

FIG. 3

FIG. 6

EP 0 317 596 B1

**FIG. 4**

**FIG. 5**

13